# EUROPEAN PATENT APPLICATION

(11) **EP 2 490 169 A1**
(43) Date of publication of application: **22.08.2012**
(21) Application number: 10823403.0
(22) Date of filing: 13.10.2010
(51) Int. Cl.: G06Q 50/00, G06Q 10/00

(54) **POSITION INFORMATION ANALYSIS DEVICE AND POSITION INFORMATION ANALYSIS METHOD**

(30) Priority: 14.10.2009 JP 2009237360
(71) Applicant: NTT DOCOMO, INC., Chiyoda-ku Tokyo 100-6150 (JP)
(72) Inventor: NAGATA Tomohiro, Tokyo 100-6150 (JP); OKAJIMA Ichiro, Tokyo 100-6150 (JP); KOBAYASHI Motonari, Tokyo 100-6150 (JP)
(74) Representative: Viering, Jentschura & Partner
(86) International application number: PCT/JP2010/067937
(87) International publication number: WO 2011/046135

(57) **Abstract**

To approximate how many people from which area flow into a specific target area during a specific target time period, a location information analysis device (1) includes: a point data reading module (12) that reads point data containing time information indicating time within the target time period for all users; a target area point data extraction module (15) that extracts, from the point data, point data containing location information indicating a location within the target area as target area point data; an address information reading module (17) that reads address information about a user; a first combining module (18) that combines the address information and the target area point data of the corresponding user; and an address information aggregation module (19) that performs aggregation of number of inflow users flowing into the target area during the target time period for each of the flow-from areas based on the target area point data containing the address information.

## Description

### Technical Field

The present invention relates to a location information analysis device and a location information analysis method that perform analysis based on location information of a mobile station carried by a user.

### Background Art

Techniques to find an inflow population or an outflow population in a predetermined place are known (for example, see Patent Literature 1). According to the method disclosed in Patent Literature 1, the number of people heading from a market area to a target spot such as a candidate site for a new store can be estimated by integrating the inflow population and the outflow population in a plurality of predetermined places, such as at intersections.

### Citation List

### Patent Literature

[Patent Literature 1] Japanese Patent Application Laid-Open Publication No. 2005-84769

### Summary of Invention

### Technical Problem

However, because the method disclosed in Patent Literature 1 estimates the number of people heading to a target spot such as a candidate site for a new store based on statistical data such as census data and field research data such as the ratio of the number of vehicles on a direction-specific basis at an intersection of different routes from a major residential area to a highway, there is a problem that it is difficult to approximate how many people from which area are actually flowing into a specific target area during a specific target time period, or how many people are actually flowing from a specific target area to which area during a specific target time period.

To solve the above problem, an object of the present invention is to provide a location information analysis device and a location information analysis method that can approximate how many people from which area are flowing into a specific target area during a specific target time period.

Further, to solve the above problem, an object of the present invention is to provide a location information analysis device and a location information analysis method that can approximate how many people to which area are flowing from a specific target area during a specific target time period.

### Solution to Problem

A location information analysis device according to one aspect of the present invention is a location information analysis device that obtains an approximate inflow population into a target area during a target time period for each of flow-from areas based on point data containing location information indicating a location of a user, time information when the location information is obtained, and user identification information of the user, which includes a point data reading module that reads point data containing time information indicating time within the target time period for all users, a target area point data extraction module that extracts point data containing location information indicating a location within the target area as target area point data, from the point data read by the point data reading module, a first unification module that unifies overlapping target area point data for the same user among the target area point data extracted by the target area point data extraction module into single target area point data, an address information reading module that reads address information about a corresponding user using the user identification information in the unified target area point data unified by the first unification module as a key, a first combining module that combines the address information read by the address information reading module and the target area point data of the corresponding user, a map information reading module that reads map information indicating a region including the target area and the flow-from areas, and an address information aggregation module that performs aggregation of number of inflow users flowing into the target area during the target time period for each of the flow-from areas read by the map information reading module based on the target area point data containing the address information combined by the first combining module. The location information analysis device may further include an approximate inflow population calculation module that calculates an approximate inflow population into the target area during the target time period, including people irrelevant to the point data in addition to the users, for each of the flow-from areas based on the number of inflow users counted by the address information aggregation module and a ratio of the approximate inflow population and the number of inflow users.

With the above-described location information analysis device, it is possible to obtain the number of inflow users flowing into the target area during the target time period for each of the flow-from areas. Further, it is possible to obtain the approximate inflow population into the target area during the target time period for each of the flow-from areas.

The location information analysis device may further include a second unification module that unifies overlapping point data for the same user among the point data read by the point data reading module into single point data, and a ratio calculation module that calculates a ratio of a national population and total number of the unified point data unified by the second unification module, and the approximate inflow population calculation module may use the ratio calculated by the ratio calculation module as the ratio of the approximate inflow population and the number of inflow users. By calculating the ratio of the total population of Japan and the number of users who have registered the point data, it is possible to calculate the approximate inflow population, which is the approximate value including people who have not registered the point data, from the number of inflow users which is calculated based on the users who have registered the point data.

A location information analysis device according to one aspect of the present invention is a location information analysis device that obtains an approximate outflow population from a target area during a target time period for each of flow-to areas based on point data containing location information indicating a location of a user, time information when the location information is obtained, and user identification information of the user, which includes an address information reading module that reads address information associated with user identification information, a user identifier extraction module that extracts user identification information associated with address information belonging to the target area among the address information read by the address information reading module, a point data reading module that reads point data containing time information indicating time within the target time period for all users, a target user point data extraction module that extracts point data containing the user identification information extracted by the user identifier extraction module as target user point data, from the point data read by the point data reading module, a map information reading module that reads map information indicating a region including the flow-to areas, a third unification module that unifies overlapping target user point data for the same user and the same flow-to area among the target user point data extracted by the target user point data extraction module into single target user point data, and a location information aggregation module that performs aggregation of number of outflow users flowing out of the target area during the target time period for each of the flow-to areas based on the unified target user point data unified by the third unification module. The location information analysis device may further include an approximate outflow population calculation module that calculates an approximate outflow population from the target area during the target time period, including people irrelevant to the point data in addition to the users, for each of the flow-to areas based on the number of outflow users counted by the location information aggregation module and a ratio of an approximate outflow population and the number of outflow users.

With the above-described location information analysis device, it is possible to obtain the approximate outflow population flowing out of the target area during the target time period for each of the flow-to areas. Further, it is possible to obtain the approximate outflow population from the target area during the target time period for each of the flow-to areas.

The location information analysis device may further include a second unification module that unifies overlapping point data for the same user among the point data read by the point data reading module into single point data, and a ratio calculation module that calculates a ratio of a national population and total number of the unified point data unified by the second unification module, and the approximate outflow population calculation module may use the ratio calculated by the ratio calculation module as the ratio of the approximate outflow population and the number of outflow users. By calculating the ratio of the total population of Japan and the number of users who have registered the point data, it is possible to calculate the approximate outflow population, which is the approximate value including people who have not registered the point data, from the number of outflow users which is calculated based on the users who have registered the point data.

Note that the location information analysis device may further include a target area input module for inputting the target area. This allows an operator to freely set the target area and input the set target area.

Note that the location information analysis device may further include a target time period input module for inputting the target time period. This allows an operator to freely set the target time period and input the set target time period.

A location information analysis device according to one aspect of the present invention may have the following configuration. Specifically, the location information analysis device is a location information analysis device that obtains an approximate inflow population into a target area during a target time period for each of flow-from areas based on point data containing location information indicating a location of a user, time information when the location information is obtained, and user identification information of the user, which includes a point data reading module that reads point data containing time information indicating time within the target time period for all users, a target area point data extraction module that extracts point data containing location information indicating a location within the target area as target area point data, from the point data read by the point data reading module, a first unification module that unifies overlapping target area point data for the same user among the target area point data extracted by the target area point data extraction module into single target area point data, an address information reading module that reads address information about a corresponding user using the user identification information in the unified target area point data unified by the first unification module as a key, a first combining module that combines the address information read by the address information reading module and the target area point data of the corresponding user, a map information reading module that reads map information indicating a region including the target area and the flow-from areas, an address information aggregation module that performs aggregation of number of inflow users flowing into the target area during the target time period for each of the flow-from areas read by the map information reading module based on the target area point data containing the address information combined by the first combining module, an approximate inflow population calculation module that calculates an approximate inflow population into the target area during the target time period, including people irrelevant to the point data in addition to the users, for each of the flow-from areas based on the number of inflow users counted by the address information aggregation module and a ratio of the approximate inflow population and the number of inflow users, a second combining module that combines the map information read by the map information reading module and the approximate inflow population for each of the flow-from areas calculated by the approximate inflow population calculation module, and an output module that outputs the map information combined by the second combining module.

Further, a location information analysis device according to one aspect of the present invention may have the following configuration. Specifically, the location information analysis device is a location information analysis device that obtains an approximate outflow population from a target area during a target time period for each of flow-to areas based on point data containing location information indicating a location of a user, time information when the location information is obtained, and user identification information of the user, which includes an address information reading module that reads address information associated with user identification information, a user identifier extraction module that extracts user identification information associated with address information belonging to the target area among the address information read by the address information reading module, a point data reading module that reads point data containing time information indicating time within the target time period for all users, a target user point data extraction module that extracts point data containing the user identification information extracted by the user identifier extraction module as target user point data, from the point data read by the point data reading module, a map information reading module that reads map information indicating a region including the flow-to areas, a third unification module that unifies overlapping target user point data for the same user and the same flow-to area among the target user point data extracted by the target user point data extraction module into single target user point data, a location information aggregation module that performs aggregation of number of outflow users flowing out of the target area during the target time period for each of the flow-to areas based on the unified target user point data unified by the third unification module, an approximate outflow population calculation module that calculates an approximate outflow population from the target area during the target time period, including people irrelevant to the point data in addition to the users, for each of the flow-to areas based on the number of outflow users counted by the location information aggregation module and a ratio of the approximate outflow population and the number of outflow users, a map information combining module that combines the map information read by the map information reading module and the approximate outflow population for each of the flow-to areas calculated by the approximate outflow population calculation module, and an output module that outputs the map information combined by the map information combining module.

The invention related to a location information analysis device may be regarded as the invention related to a location information analysis method and described as follows. The invention related to a location information analysis method achieves the same effects and advantages.

A location information analysis method according to one aspect of the present invention is a location information analysis method for obtaining an approximate inflow population into a target area during a target time period for each of flow-from areas based on point data containing location information indicating a location of a user, time information when the location information is obtained, and user identification information of the user, which includes a point data reading step of reading point data containing time information indicating time within the target time period for all users, a target area point data extraction step of extracting point data containing location information indicating a location within the target area as target area point data, from the point data read in the point data reading step, a first unification step of unifying overlapping target area point data for the same user among the target area point data extracted in the target area point data extraction step into single target area point data, an address information reading step of reading address information about a corresponding user using the user identification information in the unified target area point data unified in the first unification step as a key, a first combining step of combining the address information read in the address information reading step and the target area point data of the corresponding user, a map information reading step of reading map information indicating a region including the target area and the flow-from areas, and an address information aggregation step of performing aggregation of number of inflow users flowing into the target area during the target time period for each of the flow-from areas read in the map information reading step based on the target area point data containing the address information combined in the first combining step.

A location information analysis method according to one aspect of the present invention is a location information analysis method for obtaining an approximate outflow population from a target area during a target time period for each of flow-to areas based on point data containing location information indicating a location of a user, time information when the location information is obtained, and user identification information of the user, which includes an address information reading step of reading address information associated with user identification information, a user identifier extraction step of extracting user identification information associated with address information belonging to the target area among the address information read in the address information reading step, a point data reading step of reading point data containing time information indicating time within the target time period for all users, a target user point data extraction step of extracting point data containing the user identification information extracted in the user identifier extraction step as target user point data, from the point data read in the point data reading step, a map information reading step of reading map information indicating a region including the flow-to areas, a third unification step of unifying overlapping target user point data for the same user and the same flow-to area among the target user point data extracted in the target user point data extraction step into single target user point data, and a location information aggregation step of performing aggregation of number of outflow users flowing out of the target area during the target time period for each of the flow-to areas based on the unified target user point data unified in the third unification step.

The location information analysis method according to one aspect of the present invention may be in the following aspects.

Specifically, a location information analysis method according to one aspect of the present invention is a location information analysis method for obtaining an approximate inflow population into a target area during a target time period for each of flow-from areas based on point data containing location information indicating a location of a user, time information when the location information is obtained, and user identification information of the user, which includes a point data reading step of reading point data containing time information indicating time within the target time period for all users, a target area point data extraction step of extracting point data containing location information indicating a location within the target area as target area point data from the point data read in the point data reading step, a first unification step of unifying overlapping target area point data for the same user among the target area point data extracted in the target area point data extraction step into single target area point data, an address information reading step of reading address information about a corresponding user using the user identification information in the unified target area point data unified in the first unification step as a key, a first combining step of combining the address information read in the address information reading step and the target area point data of the corresponding user, a map information reading step of reading map information indicating a region including the target area and the flow-from areas, an address information aggregation step of performing aggregation of number of inflow users flowing into the target area during the target time period for each of the flow-from areas read in the map information reading step based on the target area point data containing the address information combined in the first combining step, an approximate inflow population calculation step of calculating an approximate inflow population into the target area during the target time period, including people irrelevant to the point data in addition to the users, for each of the flow-from areas based on the number of inflow users counted in the address information aggregation step and a ratio of the approximate inflow population and the number of inflow users, a second combining step of combining the map information read in the map information reading step and the approximate inflow population for each of the flow-from areas calculated in the approximate inflow population calculation step, and an output step of outputting the map information combined in the second combining step.

Further, a location information analysis method according to one aspect of the present invention is a location information analysis method for obtaining an approximate outflow population from a target area during a target time period for each of flow-to areas based on point data containing location information indicating a location of a user, time information when the location information is obtained, and user identification information of the user, which includes an address information reading step of reading address information associated with user identification information, a user identifier extraction step of extracting user identification information associated with address information belonging to the target area among the address information read in the address information reading step, a point data reading step of reading point data containing time information indicating time within the target time period for all users, a target user point data extraction step of extracting point data containing the user identification information extracted in the user identifier extraction step as target user point data, from the point data read in the point data reading step, a map information reading step of reading map information indicating a region including the flow-to areas, a third unification step of unifying overlapping target user point data for the same user and the same flow-to area among the target user point data extracted in the target user point data extraction step into single target user point data, a location information aggregation step of performing aggregation of number of outflow users flowing out of the target area during the target time period for each of the flow-to areas based on the unified target user point data unified in the third unification step, an approximate outflow population calculation step of calculating an approximate outflow population from the target area during the target time period, including people irrelevant to the point data in addition to the users, for each of the flow-to areas based on the number of outflow users counted in the location information aggregation step and a ratio of the approximate outflow population and the number of outflow users, a map information combining step of combining the map information read in the map information reading step and the approximate outflow population for each of the flow-to areas calculated in the approximate outflow population calculation step, and an output step of outputting the map information combined in the map information combining step.

### Advantageous Effects of Invention

According to the present invention, it is possible to obtain the number of inflow users flowing into a target area during a target time period for each of flow-from areas. Further, it is possible to obtain the approximate outflow population from a target area during a target time period for each of flow-to areas.

Further, it is possible to approximate how many people from which area are flowing into a specific target area during a specific target time period. Further, it is possible to approximate how many people are flowing from a specific target area to which area during a specific target time period.

### Brief Description of Drawings

[Fig. 1] Fig. 1 is a diagram showing a system configuration of a communication system according to the embodiment.
[Fig. 2] Fig. 2 is a diagram showing a functional configuration of a location information analysis system according to the embodiment.
[Fig. 3] Fig. 3 is a diagram showing an example of point data read by a point data reading module shown in Figs. 2 and 13.
[Fig. 4] Fig. 4 is a diagram showing an example of map information read by a map information reading module shown in Figs. 2 and 13.
[Fig. 5] Fig. 5 is a diagram showing an example of association between an area identifier and a municipal name.
[Fig. 6] Fig. 6 is a diagram showing an example of data read by an address information reading module shown in Figs. 2 and 13.
[Fig. 7] Fig. 7 is a diagram showing an example of data output by a first combining module shown in Fig. 2.
[Fig. 8] Fig. 8 is a diagram showing an example of data output by a second combining module shown in Fig. 2.
[Fig. 9] Fig. 9 is a diagram showing an example of selection of a target area.
[Fig. 10] Fig. 10 is a diagram showing an example of output by an output module shown in Figs. 2 and 13.
[Fig. 11] Fig. 11 is a diagram showing a flow of a process in a location information analysis device shown in Fig. 2.
[Fig. 12] Fig. 12 is a diagram showing a flow of a process in a second unification module and a ratio calculation module shown in Fig. 2.
[Fig. 13] Fig. 13 is a diagram showing a functional configuration of a location information analysis system according to the second embodiment.
[Fig. 14] Fig. 14 is a diagram showing an example of data output from a map information combining module shown in Fig. 13.
[Fig. 15] Fig. 15 is a diagram showing a flow of a process in a location information analysis device shown in Fig. 13.

### Description of Embodiments

A location information analysis device and a location information analysis method according to an embodiment of the present invention are described hereinafter with reference to the drawings. It is noted that, in the description, the same elements or the elements having the same functions are denoted with the same reference numerals, and repeated explanation thereof is omitted.

### (First Embodiment)

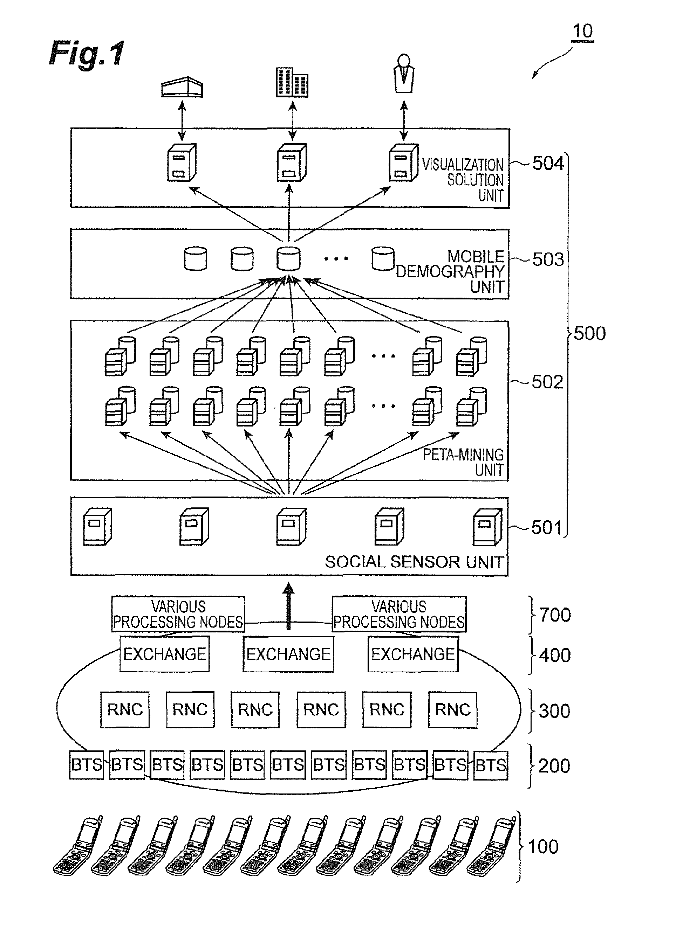

A first embodiment is described hereinafter with reference to Figs. 1 to 12.

Fig. 1 is a diagram showing a system configuration of a communication system 10 according to the embodiment. As shown in Fig. 1, the communication system 10 includes a mobile station 100, a BTS (Base Transceiver Station) 200, an RNC (Radio Network Controller) 300, an exchange 400, a various types of processing nodes 700, and a control center 500. Further, the control center 500 includes a social sensor unit 501, a peta-mining unit 502, a mobile demography unit 503, and a visualization solution unit 504.

The exchange 400 collects location information of the mobile station 100 through the BTS 200 and the RNC 300. The RNC 300 can measure the location of the mobile station 100 using a delay value in an RRC connection request signal when communication connection is performed with the mobile station 100. The exchange 400 can receive the location information of the mobile station 100 measured in this manner when the mobile station 100 executes communication connection. The exchange 400 stores the received location information and outputs the collected location information to the control center 500 at predetermined timing or in response to a request from the control center 500. Note that typically about one thousand RNCs 300 are located all over Japan. On the other hand, about three hundred exchanges 400 are located in Japan.

The various types of processing nodes 700 acquire location information of the mobile station 100 through the RNC 300 and the exchange 400, perform recalculation of the location or the like in some cases, and output the collected location information to the control center 500 at predetermined timing or in response to a request from the control center 500.

The control center 500 includes the social sensor unit 501, the peta-mining unit 502, the mobile demography unit 503, and the visualization solution unit 504 as described above, and each unit performs statistical processing using the location information of the mobile station 100.

The social sensor unit 501 is a server device that collects data containing the location information of the mobile station 100 and the like from each exchange 400 and various types of processing nodes 700, or offline. The social sensor unit 501 is configured to be able to receive data output from the exchange 400 and the various types of processing nodes 700 at regular intervals or acquire data from the exchange 400 and the various types of processing nodes 700 according to the timing predetermined in the social sensor unit 501.

The peta-mining unit 502 is a server device that converts the data received from the social sensor unit 501 into a predetermined data format. For example, the peta-mining unit 502 can perform sorting using the user ID as a key or sorting by area.

The mobile demography unit 503 is a server device that performs aggregation processing of the data processed in the peta-mining unit 502, which is, counting of each item. For example, the mobile demography unit 503 can count the number of users located in a certain area or perform aggregation of the area distribution.

The visualization solution unit 504 is a server device that processes the data aggregated in the mobile demography unit 503 into visible. For example, the visualization solution unit 504 can map the aggregated data onto a map. The data processed in the visualization solution unit 504 is provided to corporations, government and other public offices or individuals and used for retail development, road traffic survey, disaster risk management, environmental protection and the like. Note that the statistically processed information is processed so as not to identify individuals and the like to avoid invasion of privacy as a matter of course.

It should be noted that the social sensor unit 501, the peta-mining unit 502, the mobile demography unit 503 and the visualization solution unit 504 are server devices as described above, and they have a basic configuration of a typical information processing device (specifically, CPU, RAM, ROM, input device such as keyboard and mouse, communication device that performs communication with the outside, storage device that stores information, output device such as display and printer) as a matter of course, though not shown.

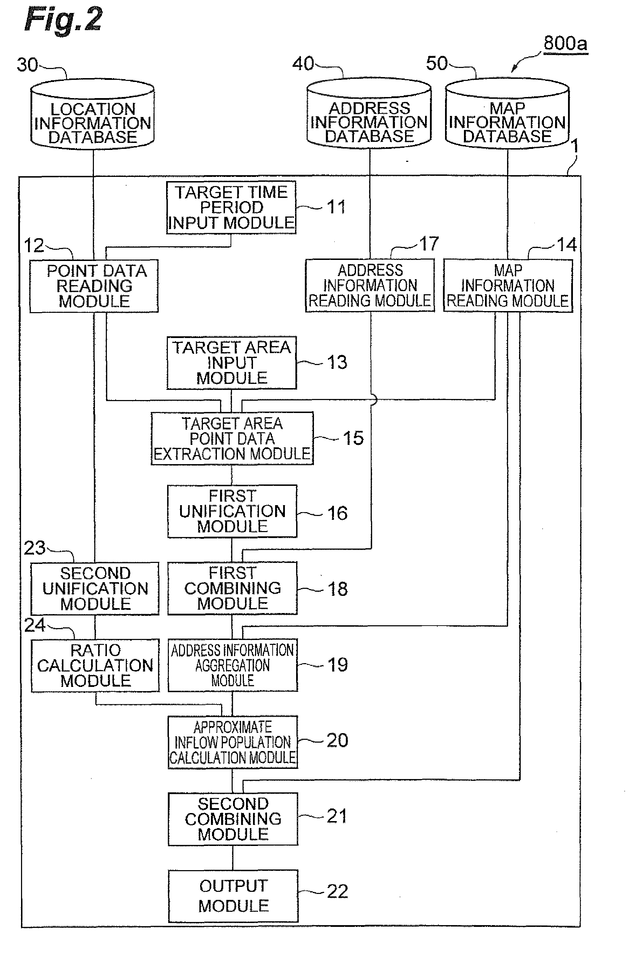

Fig. 2 shows a functional configuration of a location information analysis system 800a according to the embodiment. As shown in Fig. 2, the location information analysis system 800a includes a location information analysis device 1, a location information database 30, an address information database 40, and a map information database 50.

The location information analysis device 1 has a function of obtaining an approximate inflow population into a specific target area during a target time period for each of flow-from areas based on point data containing location information indicating a location of a user, positioning time information (time information) when the location information is obtained, and user identifier (user identification information) of the user. The details of the functions of the location information analysis device 1 are described later.

The user indicates persons who register location information into the location information analysis system 800a. As an example of the user which is used for explanation of the invention, a person who is using a mobile communications service provided by a given carrier is used in this embodiment. The location information analysis device 1 can thereby use the location information of the mobile station 100 acquired by the various types of processing nodes 700 through the RNC 300 and the exchange 400. However, if the location information of the mobile station 100 is GPS location information, the various types of processing nodes 700 can acquire the GPS location information of the mobile station 100 without through the RNC 300 and the exchange 400, and the location information analysis device 1 can use the acquired GPS location information of the mobile station 100. Acquisition of the GPS location information is described later.

It should be noted that the range of applications of the present invention is not limited thereto, and a group of a certain number or more whose places of residence and living preferences do not vary very widely and whose location information can be registered into the location information database 30, which is described later, can be used as the user.

The target area indicates areas which are not zero in size and which can be freely set by an operator of the location information analysis system 800a. In this embodiment, the target area is a target for analysis of how many people have been flowing into the area. As a target area setting method for explanation of the invention, a setting method that designates municipalities is used in this embodiment. However, the target area setting method is not necessarily limited thereto, and the target area may be set on a prefecture basis. Alternatively, the target area may be set as a range smaller than municipalities. Further, instead of administrative sections, land may be divided into mesh-like sections having a given area, and the target area may be set on the mesh basis.

The operator indicates persons including those who analyze the population inflow or outflow using the location information analysis system 800a according to the present invention and an administrator of the location information analysis system 800a.

The approximate inflow population indicates an approximate value for the number of people who have flowed into the target area. The flow-from area indicates lands divided to serve as a reference for calculating from which area the people have flowed into the target area. In this embodiment, as a dividing method (granularity) to the flow-from areas, division (granularity) to the level of municipalities is used. However, the dividing method (granularity) to the flow-from areas is not necessarily limited thereto, and land may be divided on a prefecture basis. Alternatively, land may be divided to areas smaller than municipalities. Further, instead of administrative sections, land may be divided into mesh-like sections having a given area size. Although the granularity of the flow-from areas and the target area setting method are the same (municipalities) in this embodiment, they are not necessarily the same.

The location information database 30 has a function of storing location information of a user in association with positioning time information indicating time when the location information is measured.

Specifically, the location information database 30 collects location information of a user at regular intervals by inputting the location information of the mobile station 100 acquired by the various types of processing nodes 700 through the RNC 300 and the exchange 400.

The address information database 40 has a function of storing address information of a user in association with a user identifier for uniquely identifying the user. Specifically, the address information database 40 can be implemented by using customer information of a carrier, for example.

The map information database 50 has a function of storing information related to the shapes and the locations on the ground of the flow-from areas and the target area.

The functions of the location information analysis device 1, the location information database 30, the address information database 40 and the map information database 50 are physically implemented by cooperation of the servers included in the control center 500. Each of the functions may be implemented by a plurality of servers distributed across the network. Alternatively, one server on the network may implement one function.

To be specific, the location information analysis device 1 includes a target time period input module 11, a point data reading module 12, a target area input module 13, a map information reading module 14, a target area point data extraction module 15, a first unification module 16, an address information reading module 17, a first combining module 18, an address information aggregation module 19, an approximate inflow population calculation module 20, a second combining module 21, an output module 22, a second unification module 23, and a ratio calculation module 24.

The target time period input module 11 has a function of accepting input of a target time period by an operator and a function of outputting the target time period input by the operator to the point data reading module 12, which is described below. The target time period indicates a time of a certain length which can be freely set by the operator. Note that input of the target time period is not an absolute necessity, and a preset target time period or a target time period input in the past may be used.

The point data reading module 12 has a function of reading point data containing time information indicating the time within the target time period input through the target time period input module 11 for all users from the location information database 30.

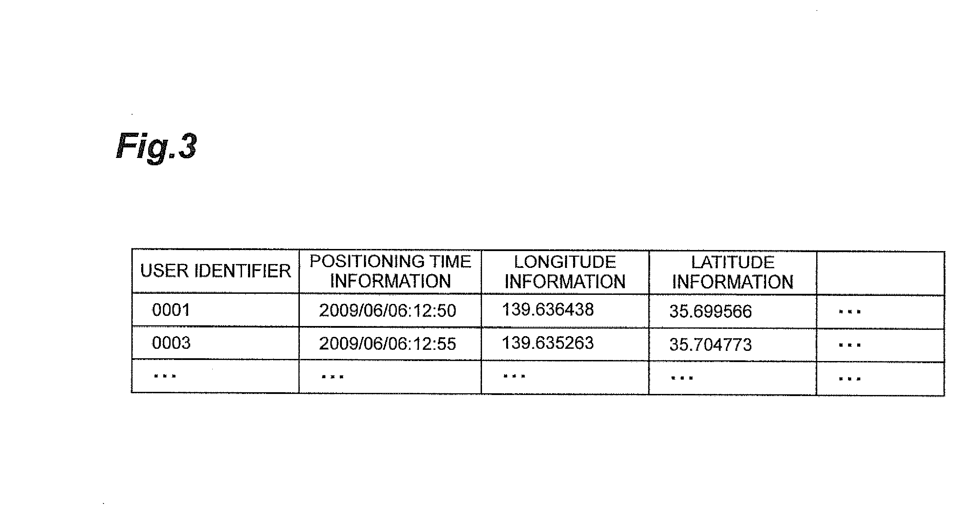

The point data indicates data containing positioning time information, location information of a user at the time, and a user identifier for uniquely identifying the user. In the point data, the positioning time information and the location information are both associated with the user identifier. Fig. 3 shows a specific example of the point data. As shown in Fig. 3, as the point data used for explanation of the invention in this embodiment, information containing a user identifier, positioning time information and longitude information and latitude information ("longitude information" and "latitude information" are collectively referred to as "location information") is used. Note that as "location information" of a user, GPS location information containing longitude information and latitude information may be used for example. The GPS location information has a structure containing a user identifier, positioning time information and longitude information and latitude information as shown in Fig. 3. Regarding collection of the GPS information, a GPS information collecting unit which is included in the social sensor unit 501 or the mobile demography unit 503, though not shown, collects longitude information and latitude information indicating the location of each mobile station 100 transmitted from each mobile station 100. Note that the GPS information collecting unit may accumulate the collected longitude information and latitude information of the mobile station 100 together with the user identifier and the positioning time information of the mobile station 100 as GPS location information into a GPS information accumulating unit which is included in the peta-mining unit 502, though not shown, for example. Further, besides the GPS location information, the coordinates (longitude information and latitude information) at the center of a base station or a sector associated with SAI (Subscriber Area ID) information which is added in the PRACH-PD process may be used as "location information" of a user, for example. In this case, data obtained by combining the point data in which the SAI information is contained and the coordinate information (longitude information and latitude information) at the center of a base station or a sector corresponding to the SAI information is handled as the above "point data".

The "point data containing time information indicating the time within the target time period" indicates point data in which the positioning time information shown in Fig. 3 is included within the target time period which is input by the operator through the target time period input module 11. Further, the "point data for all users" is, in other words, all point data regardless of the type of the user identifier shown in Fig. 3.

The target area input module 13 has a function of accepting input of a target area by an operator and a function of outputting information about the input target area to the target area point data extraction module 15, which is described below. Note that input of the target area is not an absolute necessity, and a preset target area or a target area input in the past may be used.

The map information reading module 14 has a function of reading map information indicating a region including the target area and the flow-from areas.

The map information includes polygon information and an area identifier for uniquely identifying the polygon information. The polygon information is information that specifies the shapes and the locations on the ground of the target area and the flow-from areas by longitude and latitude. When a specific area identifier and a specific point on the ground are defined, the locational relationship as to whether the point on the ground is within or outside the area on the ground which is specified by the polygon information can be determined. Hereinafter, the state where one point on the ground which is specified by the location information is within the area on the ground which is specified by the polygon information is represented as "specific location information belongs to specific polygon information", and the state where one point on the ground which is specified by the location information is not within the area on the ground which is specified by the polygon information is represented as "specific location information does not belong to specific polygon information".

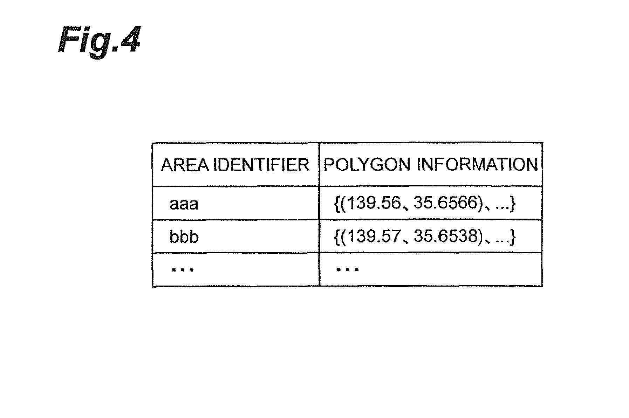

Fig. 4 shows an example of map information read by the map information reading module 14. As shown in Fig. 4, the map information read by the map information reading module 14 has a structure in which polygon information and an area identifier for uniquely identifying the polygon information are associated with each other.

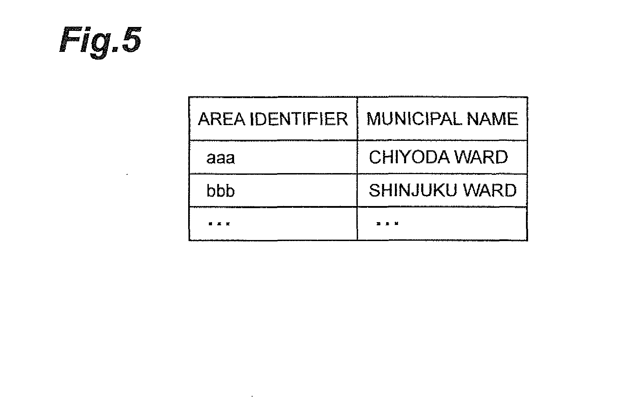

The map information reading module 14 may further read data in which an area identifier and a municipal name are associated with each other from the map information database 50. Fig. 5 shows an example of data in which a municipal name and an area identifier are associated with each other. The data illustrated in Fig. 5 may be pre-stored in a storage unit (not shown) of the location information analysis device 1.

The target area point data extraction module 15 has a function of extracting point data containing the location information indicating the location within the target area which is input through the target area input module 13 as target area point data from the point data read by the point data reading module 12, and a function of outputting the extracted target area point data to the first unification module 16, which is described later.

To be specific, the target area point data extraction module 15 receives information about the target area from the target area input module 13, refers to the data shown in Fig. 5 and thereby converts the input information about the target area into an area identifier. The target area point data extraction module 15 obtains polygon information associated with the area identifier through the map information reading module 14. Further, the target area point data extraction module 15 determines whether the location information contained in the point data belongs to the input polygon information or not for each of the point data input from the point data reading module 12. When it is determined to belong to the polygon information, the target area point data extraction module 15 extracts the point data as the target area point data.

The first unification module 16 has a function of unifying overlapping target area point data for the same user among the target area point data extracted by the target area point data extraction module 15 into single target area point data, and a function of outputting the unified target area point data to the first combining module 18, which is described later.

To be specific, for the target area point data having the same user identifier shown in Fig. 3 among the target area point data which are input from the target area point data extraction module 15, the first unification module 16 leaves one target area point data and eliminates the other target area point data. The overlapping target area point data for the same user can be thereby unified into single target area point data. Note that a method of selecting one target area point data to be left is not particularly limited. For example, the point information with the latest positioning time information may be left.

The address information reading module 17 has a function of reading address information from the address information database 40.

The address information reading module 17 in this embodiment has a function of reading address information about a corresponding user using the user identification information of the unified target area point data by the first unification module 16 as a key, and a function of outputting the read address information to the first combining module 18, which is described below.

The first combining module 18 has a function of combining the address information read by the address information reading module 17 and the target area point data of the corresponding user.

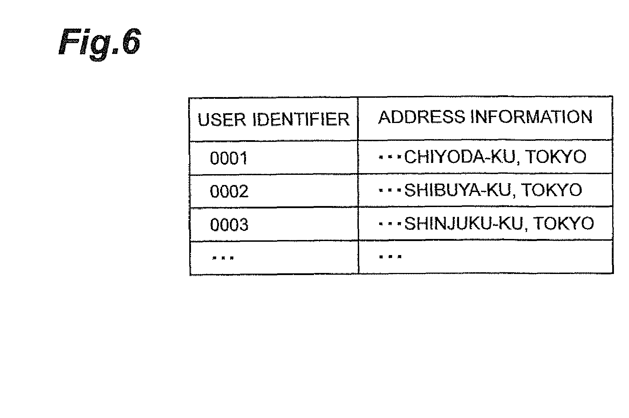

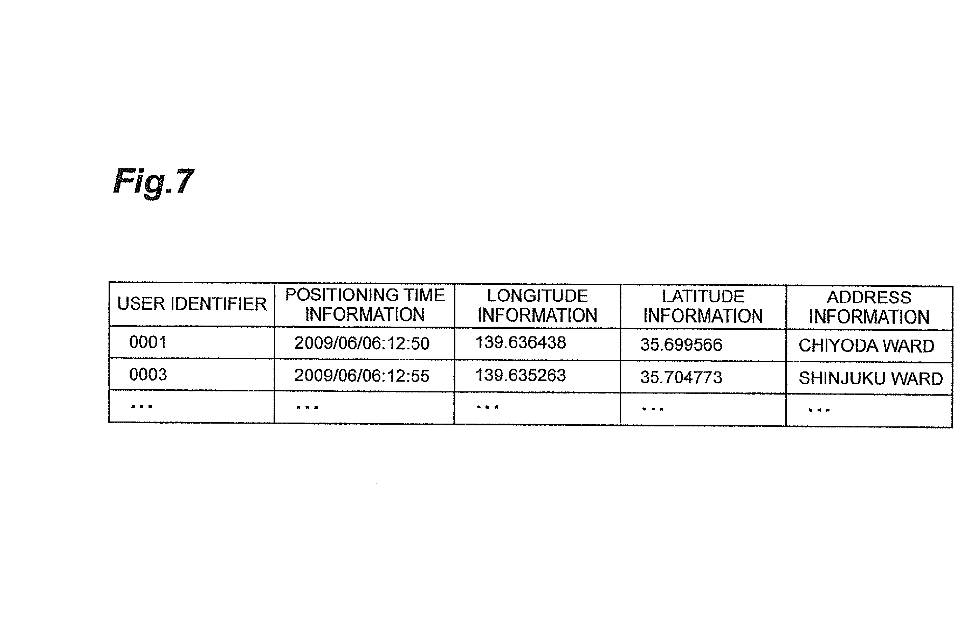

To be specific, the first combining module 18 outputs the user identifiers contained in the unified target area point data input from the first unification module 16 to the address information reading module 17 and then obtains the address information associated with the user identifiers through the address information reading module 17. The first combining module 18 combines the obtained address information and the unified target area point data. Assume that the first unification module 16 outputs the data shown in Fig. 3 as the unified target area point data, and the address information reading module 17 reads the address information shown in Fig. 6. Fig. 7 shows an output example of the first combining module 18 in this case. As shown in Fig. 7, the first combining module 18 adds (combines) the address information associated with the user identifier as a key to corresponding data among the unified target area point data. In this embodiment, because the granularity of the flow-from areas is municipalities, the first combining module 18 obtains information of municipalities from the address information read by the address information reading module 17 and adds the information to the unified target area point data (see Fig. 7). The "address information" added in this manner corresponds to the flow-from area.

The address information aggregation module 19 has a function of performing aggregation of the number of users who have flowed into the target area during the target time period for each of the flow-from areas read by the map information reading module 14 based on the target area point data containing the address information combined by the first combining module 18.

In this embodiment, the map information reading module 14 reads the map information of each municipality as the flow-from area. Thus, the address information aggregation module 19 counts the number of the target area point data containing the address information combined by the first combining module 18 shown in Fig. 7 for each of the municipalities contained in "address information".

The address information aggregation module 19 further outputs the number of unified target area point data counted by the above method as the number of inflow users for each of the flow-from areas to the approximate inflow population calculation module 20, which is described later.

Note that, when predetermined grids, not municipalities, are used as the flow-from areas, the first combining module 18 converts the address information read by the address information reading module 17 into longitude information and latitude information and combines the converted information with the target area point data. Thus, in this case, "address information" shown in Fig. 7 contains the longitude information and latitude information instead of the municipal name. Further, in this case, the address information aggregation module 19 determines to which one of the grids, which are the flow-from areas read by the map information reading module 14, one point on the ground specified by the longitude information and latitude information contained in the "address information" shown in Fig. 7 belongs, and counts the number of unified target area point data based on the grid.

The approximate inflow population calculation module 20 has a function of calculating an approximate inflow population into the target area during the target time period, including people who are irrelevant to the point data in addition to the users, for each of the flow-from areas based on the number of inflow users counted by the address information aggregation module 19, and the ratio of the approximate inflow population and the number of inflow users, and a function of outputting the calculated approximate inflow population for each of the flow-from areas to the second combining module 21, which is described later.

To be specific, the approximate inflow population calculation module 20 receives the ratio of the approximate inflow population and the number of inflow users from the ratio calculation module 24, which is described later. A method of calculating the ratio is described later. The approximate inflow population calculation module 20 calculates the approximate inflow population for each of the flow-from areas by multiplying the number of inflow users for each of the flow-from areas input from the address information aggregation module 19 by the ratio input from the ratio calculation module 24, and outputs the calculated approximate inflow population to the second combining module 21, which is described later.

The second combining module 21 has a function of combining the map information read by the map information reading module 14 and the approximate inflow population for each of the flow-from areas calculated by the approximate inflow population calculation module 20, and a function of outputting the combined data to the output module 22, which is described later.

To be specific, the second combining module 21 obtains the area identifier corresponding to the approximate inflow population of each of the flow-from areas calculated by the approximate inflow population calculation module 20 by referring to the association between area identifiers and municipal names shown in Fig. 5. The second combining module 21 associates (combines) the obtained area identifier with the approximate inflow population which is input from the approximate inflow population calculation module 20. Further, the second combining module 21 associates the polygon information contained in the map information which is input through the map information reading module 14 with the input approximate inflow population, using the area identifier as a key.

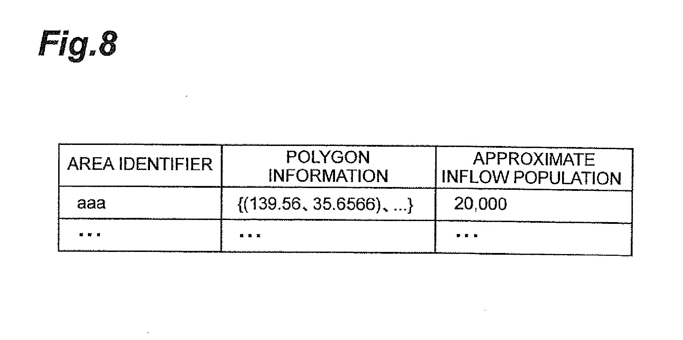

Fig. 8 shows an example of the data obtained as a result of the combining processing of the second combining module 21.

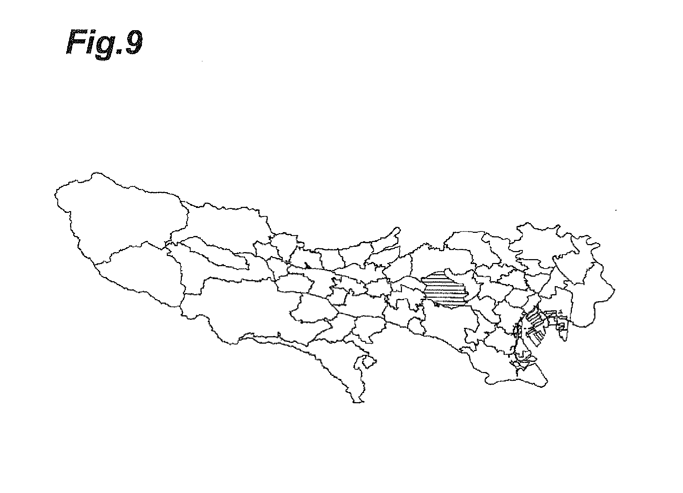

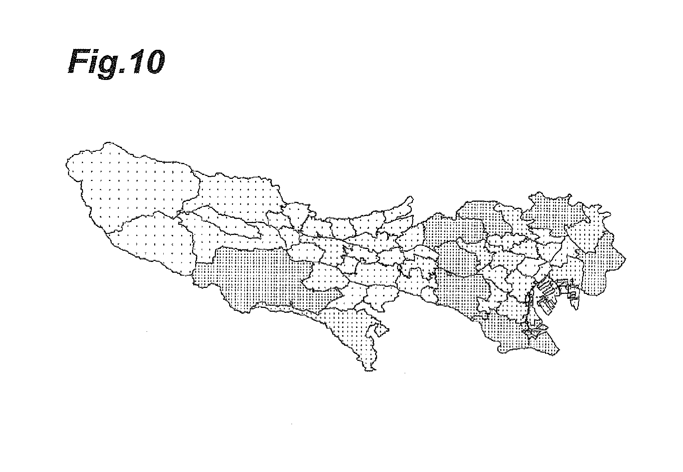

The output module 22 has a function of outputting the map information combined by the second combining module 21. Fig. 10 shows an example of output from the output module 22 when Suginami Ward is input as an example of the target area as shown in Fig. 9. As shown in Fig. 10, the output module 22 draws the borderline of the flow-from areas based on the polygon information contained in the data input form the second combining module 21, and represents the values of the approximate inflow population associated with the polygon information by using different colors in the borderline, for example.

There may be various ways to represent the values of the approximate inflow population. For example, the population values may be represented by gradation of colors. The population values may be represented by warm colors and cold colors. As shown in Fig. 10, the population values may be represented by dot density.

By representing the approximate inflow population for each of the flow-from areas in this manner, it is possible to visually represent from which area the people have flowed into the target area during a given target time period.

The second unification module 23 has a function of unifying overlapping point data for the same user among the point data read by the point data reading module 12 into single point data, and a function of outputting the unified point data to the ratio calculation module 24, which is described later.

To be specific, for the point data having the same user identifier among the point data of all users throughout Japan which are red by the point data reading module 12, the second unification module 23 leaves one point data and eliminates the other point data and thereby obtains single unified point data.

The ratio calculation module 24 has a function of calculating the ratio of the national population and the total number of the unified point data by the second unification module 23.

To be specific, the ratio calculation module 24 divides the total population of Japan by the total number of unified point data. The ratio of the national population and the total number of unified point data, which is the total number of users from whom the location information database 30 can obtain the point data during the target time period can be thereby calculated. It is thereby possible to obtain the approximate inflow population, which is the approximate value including the people from whom the point data cannot be obtained, from the number of inflow users, which is a figure about the users from whom the point data can be obtained.

Note that, as the above ratio, a terminal contract ratio, which is the ratio of "the number of mobile stations of a specific carrier for which location information is obtained" to "the population in an area of a predetermined range", may be used. An example of using the terminal contract ratio, a way of calculating the terminal contract ratio and the like are described later. Further, in respect to the above-described ratio (including the terminal contract ratio), a ratio for each area, a ratio for each gender, a ratio for each age group and the like may be calculated for use.

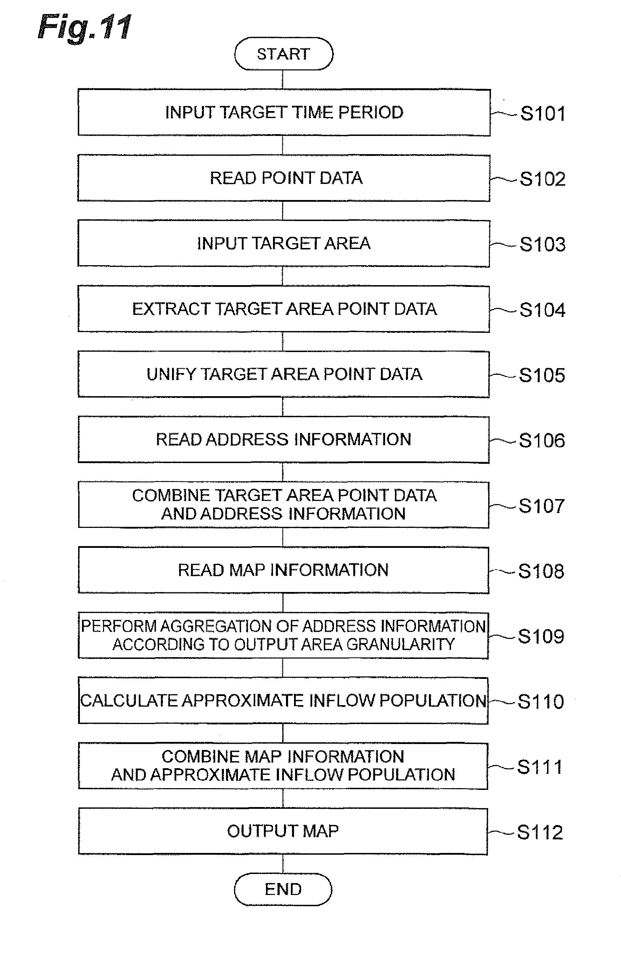

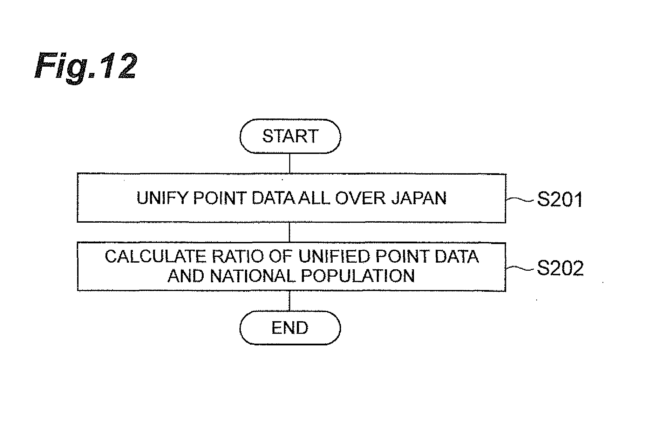

The flow of the process in the location information analysis device 1 according to the embodiment is described hereinafter with reference to Figs. 11 and 12.

The target time period input module 11 in the location information analysis device 1 accepts input of a target time period (Step S101). Note that input of the target time period is not an absolute necessity, and a preset target time period or a target time period input in the past may be used.

The point data reading module 12 reads point data which contains the time information indicating the time within the target time period input through the target time period input module 11 for all users from the location information database 30 (Step S102: Point data reading step).

The target area input module 13 accepts input of a target area (Step S103). Note that input of the target area is not an absolute necessity, and a preset target area or a target area input in the past may be used.

The target area point data extraction module 15 extracts point data which contains the location information indicating the location within the target area input through the target area input module 13 as target area point data from the point data read by the point data reading module 12 (Step S104: Target area point data extraction step).

The first unification module 16 unifies overlapping target area point data for the same user among the target area point data extracted by the target area point data extraction module 15 into single target area point data (Step S105: First unification step).

The address information reading module 17 reads address information about a corresponding user using the user identification information of the unified target area point data by the first unification module 16 as a key (Step S106: Address information reading step).

The first combining module 18 combines the address information read by the address information reading module 17 and the target area point data of the corresponding user (Step S107: First combining step).

The map information reading module 14 reads map information indicating a region including the target area and the flow-from area (Step S108: Map information reading step).

The address information aggregation module 19 performs aggregation of the number of inflow users who have flowed into the target area during the target time period for each of the flow-from areas read by the map information reading module 14 based on the target area point data containing the address information combined by the first combining module 18 (Step S109: Address information aggregation step).

The approximate inflow population calculation module 20 calculates the approximate inflow population into the target area during the target time period, including people who are irrelevant to the point data in addition to the users, for each of the flow-from areas based on the number of inflow users counted by the address information aggregation module 19, and the ratio of the approximate inflow population and the number of inflow users (Step S110: Approximate inflow population calculation step).

The second combining module 21 combines the map information read by the map information reading module 14 and the approximate inflow population for each of the flow-from areas calculated by the approximate inflow population calculation module 20 (Step S111: Second combining step).

The output module 22 outputs the map information combined by the second combining module 21 (Step S112: Output step).

Next, the flow of the calculation process of the ratio of the approximate inflow population and the number of inflow users is described with reference to Fig. 12.

The second unification module 23 unifies overlapping point data for the same user among the point data read by the point data reading module 12 into single point data (Step S201). Then, the ratio calculation module 24 calculates the ratio of the national population and the total number of the unified point data by the second unification module 23 (Step S202).

Note that, instead of using the ratio calculated as above, a terminal contract ratio, which is the ratio of "the number of mobile stations of a specific carrier for which location information is obtained" to "the population in an area of a predetermined range", may be used as the ratio of the approximate inflow population and the number of inflow users. Specifically, the approximate inflow population calculation module 20 may calculate the approximate inflow population by correcting the number of inflow users using the terminal contract ratio, and, the approximate inflow population may be calculated by dividing the number of inflow users by the terminal contract ratio, for example. Note that the terminal contract ratio may be pre-stored in the location information analysis device 1 or input each time the processing is performed. Further, the approximate inflow population calculation module 20 may calculate the terminal contract ratio based on information about the population in an area of a predetermined range which is externally input to the location information analysis device 1 or pre-stored in the location information analysis device 1 and the number of mobile stations of a specific carrier for which location information is obtained. For example, the terminal contract ratio may be calculated by dividing the number of mobile stations of a specific carrier for which location information is obtained by the value of the population in an area of a predetermined range. It is of course not an absolute necessity to calculate the terminal contract ratio each time. In this manner, by calculating the terminal contract ratio using the number of mobile stations of a specific carrier for which location information is obtained, it is possible to calculate the approximate inflow population in consideration of the number of mobile stations for which location information is not obtained (for example, mobile stations in power-off mode, mobile stations located out of area and the like). Further, in respect to the above-described ratio (including the terminal contract ratio), a ratio for each area, a ratio for each gender, a ratio for each age group and the like may be calculated for use.

Hereinafter, the effects and advantages of the location information analysis system 800a according to the embodiment are described.

In the location information analysis system 800a, the point data reading module 12 reads location information based on a target time period, and the address information reading module 17 reads address information. With use of those information, it is possible to approximate how many people from which area flows into a specific target area during a specific target time period.

Further, the second unification module 23 of the location information analysis device 1 unifies overlapping point data for the same user among the point data read by the point data reading module 12 into single point data, and the ratio calculation module 24 calculates the ratio of the national population and the total number of the unified point data by the second unification module 23. By calculating the ratio of the total population of Japan and the number of users who have registered the point data, it is possible to calculate the approximate inflow population, which is the approximate value including people who have not registered the point data, from the number of inflow users which is calculated based on the users who have registered the point data.

Further, because the target area input module 13 accepts input of a target area from an operator, the operator can freely set the target area.

Furthermore, because the target time period input module 11 accepts input of a target time period from an operator, the operator can freely set the target time period.

### (Second Embodiment)

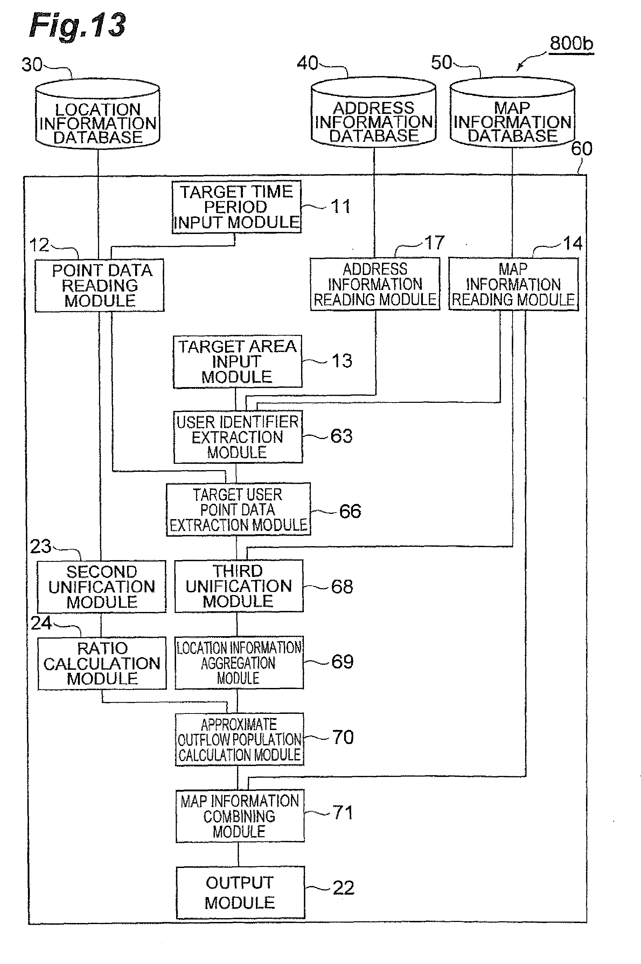

A location information analysis system 800b according to a second embodiment of the present invention is described hereinafter with reference to Figs. 13, 14 and 15. Although the approximate inflow population flowing into the target area is calculated in the first embodiment described above, an approximate outflow population flowing out of the target area is calculated in the location information analysis system 800b according to the second embodiment as described below. Differences from the location information analysis system 800a according to the first embodiment are mainly described hereinbelow, and repeated explanation is omitted.

The approximate outflow population indicates an approximate value for the number of people who have flowed out of the target area. The flow-to area indicates the lands divided to serve as a reference for calculating to which area the people have flowed from the target area.

As shown in Fig. 13, the location information analysis system 800b according to the embodiment includes a location information database 30, an address information database 40, a map information database 50, and a location information analysis device 60.

Among those components, the functions of the location information database 30, the address information database 40 and the map information database 50 are the same as those described in the first embodiment, and explanation thereof is omitted.

The location information analysis device 60 includes a target time period input module 11, a point data reading module 12, a target area input module 13, a map information reading module 14, an address information reading module 17, an output module 22, a second unification module 23, a ratio calculation module 24, a user identifier extraction module 63, a target user point data extraction module 66, a third unification module 68, a location information aggregation module 69, an approximate outflow population calculation module 70, and a map information combining module 71.

Among those components, the functions of the target time period input module 11, the point data reading module 12, the target area input module 13, the map information reading module 14, the address information reading module 17, the output module 22, the second unification module 23, and the ratio calculation module 24 are the same as those described in the first embodiment, and explanation thereof is omitted.

The user identifier extraction module 63 has a function of extracting a user identifier associated with address information which belongs to the target area input through the target area input module 13 among the address information read by the address information reading module 17, and a function of outputting the extracted user identifier to the target user point data extraction module 66, which is described later.

To be specific, the user identifier extraction module 63 receives information about the target area which is input by an operator from the target area input module 13. The user identifier extraction module 63 refers to the data shown in Fig. 5 and thereby converts the information about the target area input from the target area input module 13 into an area identifier. The user identifier extraction module 63 receives polygon information associated with the converted area identifier through the map information reading module 14. Further, the user identifier extraction module 63 determines whether each of the address information read by the address information reading module 17 belongs to the input polygon information or not. When it is determined to belong to the polygon information, the user identifier extraction module 63 extracts the user identifier associated with the address information.

The target user point data extraction module 66 has a function of extracting the point data containing the user identifier extracted by the user identifier extraction module 63 as target user point data from the point data read by the point data reading module 12, and a function of outputting the extracted target user point data to the third unification module 68, which is described later.

To be specific, the target user point data extraction module 66 receives the point data read by the point data reading module 12 and extracts, from the input point data, the point data where "user identifier" is contained in the user identifier extracted by the user identifier extraction module 63.

The third unification module 68 has a function of unifying overlapping target user point data for the same user and the same flow-to area among the target user point data extracted by the target user point data extraction module 63 into single target user point data, and a function of outputting the unified target user point data to the location information aggregation module 69, which is described later.

To be specific, the third unification module 68 receives the target user point data from the target user point data extraction module 66 and receives map information through the map information reading module 14. The third unification module 68 determines polygon information to which the location information of each of the target user point data belongs from the location information contained in the input target user point data and the polygon information contained in the map information. When the polygon information to which the location information belongs is the same and there are a plurality of target user point data containing the same user identification information, the third unification module 68 leaves one of the target user point data and eliminates the other target user point data. Although a method of selecting one target user point data among a plurality of target user point data is not particularly limited, the target user point data with the latest positioning time information may be selected as one target user point data.

Further, as another example, the third unification module 68 may sort the input target user point data by user and determine polygon information to which the location information of each of the target user point data belongs from the location information contained in the target user point data and the polygon information contained in the map information, count the total number of flow-to areas (i.e. the number of different polygon information) for each of the users, and set the number of users of one flow-to area for a given user as the inverse of the total number of flow-to areas of the user (i.e. "1/the total number of flow-to areas of the user"). In other words, the third unification module 68 may make setting so that the target user point data for one flow-to area for the given user is counted as the number of people of "1/the total number of flow-to areas of the user"). In this manner, by setting the number of users of one flow-to area as the inverse of the total number of flow-to areas of the user for each of the users and then performing aggregation of the number of users by the location information aggregation module 69, it is possible to avoid redundant counting of the point data of different flow-to areas for the same user.

The third unification module 68 further associates the area identifier associated with the polygon information to which the location information contained in the unified target user point data belongs with the unified target user point data.

The location information aggregation module 69 has a function of performing aggregation of the number of outflow users who have flowed out of the target area during the target time period for each of the flow-to areas based on the unified target user point data by the third unification module 68, and a function of outputting the aggregate number of outflow users for each of the flow-to areas to the approximate outflow population calculation module 70, which is described later.

To be specific, the location information aggregation module 69 receives the unified target user point data from the third unification module 68 and counts the number of the input unified target user point data for each of the area identifiers associated with the third unification module 68.

The location information aggregation module 69 further outputs data containing the aggregate number of data and the corresponding area identifier in association with each other as the number of outflow users for each of the flow-to areas to the approximate outflow population calculation module 70, which is described below.

The approximate outflow population calculation module 70 has a function of calculating an approximate outflow population from the target area during the target time period, including people who are irrelevant to the point data in addition to the users, for each of the flow-to areas based on the number of outflow users counted by the location information aggregation module 69, and the ratio of the approximate outflow population and the number of outflow users, and a function of outputting the calculated approximate outflow population for each of the flow-to areas to the map information combining module 71, which is described later.

To be specific, the approximate outflow population calculation module 70 receives the ratio of the approximate outflow population and the number of outflow users from the ratio calculation module 24. The ratio of the approximate outflow population and the number of outflow users used in this embodiment is the same as the ratio of the approximate inflow population and the number of inflow users described in the first embodiment. Note that, however, a terminal contract ratio, which is the ratio of "the number of mobile stations of a specific carrier for which location information is obtained" to "the population in an area of a predetermined range", may be used as the ratio of the approximate outflow population and the number of outflow users, like the first embodiment. Specifically, the approximate outflow population calculation module 70 may calculate the approximate outflow population by correcting the number of outflow users using the terminal contract ratio, and, the approximate outflow population may be calculated by dividing the number of outflow users by the terminal contract ratio, for example. Note that the terminal contract ratio may be pre-stored in the location information analysis device 1 or input each time the processing is performed. Further, the approximate outflow population calculation module 70 may calculate the terminal contract ratio based on information about the population in an area of a predetermined range which is externally input to the location information analysis device 1 or pre-stored in the location information analysis device 1 and the number of mobile stations of a specific carrier for which location information is obtained. For example, the terminal contract ratio may be calculated by dividing the number of mobile stations of a specific carrier for which location information is obtained by the value of the population in an area of a predetermined range. It is of course not an absolute necessity to calculate the terminal contract ratio each time. In this manner, by calculating the terminal contract ratio using the number of mobile stations of a specific carrier for which location information is obtained, it is possible to calculate the approximate outflow population in consideration of the number of mobile stations for which location information is not obtained (for example, mobile stations in power-off mode, mobile stations located out of area and the like). Further, in respect to the above-described ratio (including the terminal contract ratio), a ratio for each area, a ratio for each gender, a ratio for each age group and the like may be calculated for use.

The approximate outflow population calculation module 70 calculates the approximate outflow population for each of the flow-to areas by multiplying each of the number of outflow users for each of the flow-to areas input from the location information aggregation module 69 by the ratio of the approximate outflow population and the number of outflow users.

The map information combining module 71 has a function of combining the map information read by the map information reading module 14 and the approximate outflow population for each of the flow-to areas calculated by the approximate outflow population calculation module 70, and a function of outputting the combined data to the output module 22.

To be specific, the map information combining module 71 associates (combines) the polygon information contained in the map information which is input through the map information reading module 14 with the approximate outflow population for each of the flow-to areas, using the area identifier associated with the unified target user point data by the third unification module 68 as a key.

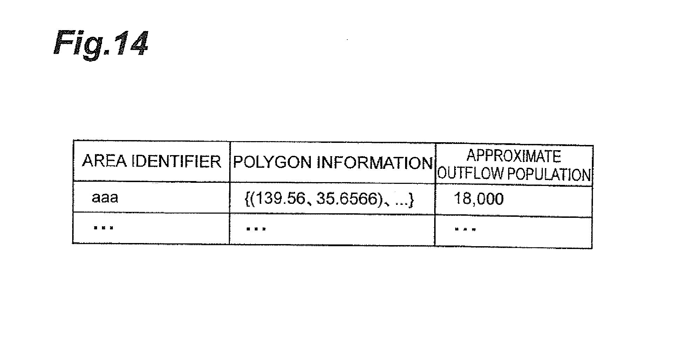

Fig. 14 shows an example of the data obtained as a result of the combining processing of the map information combining module 71.

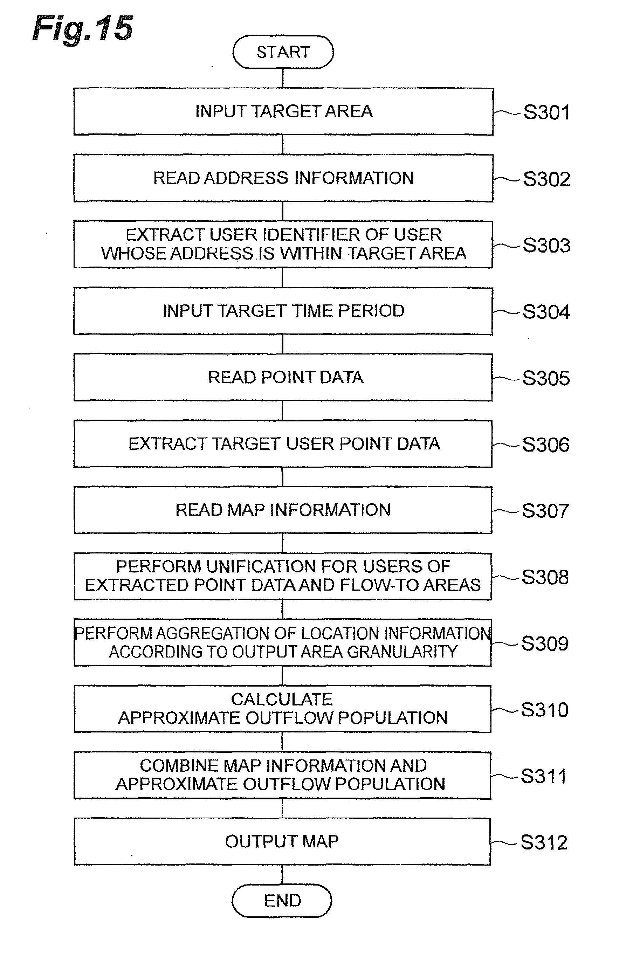

The flow of the process in the location information analysis device 60 according to the embodiment is described hereinafter with reference to Fig. 15.

The target area input module 13 accepts input of a target area (Step S301). Note that input of the target area is not an absolute necessity, and a preset target area or a target area input in the past may be used.

The address information reading module 17 reads address information associated with the user identifier (Step S302: Address information reading step).

The user identifier extraction module 63 extracts a user identifier associated with address information which belongs to the target area input through the target area input module 13 among the address information read by the address information reading module 17 (Step S303: User identifier extraction step).

The target time period input module 11 accepts input of a target time period (Step S304). Note that input of the target time period is not an absolute necessity, and a preset target time period or a target time period input in the past may be used.

The point data reading module 12 reads point data containing time information indicating the time within the target time period input through the target time period input module 11 for all users from the location information database 30 (Step S305: Point data reading step).

The target user point data extraction module 66 extracts the point data containing the user identifier extracted by the user identifier extraction module 63 as the target user point data from the point data read by the point data reading module 12 (Step S306: Target user point data extraction step).

The map information reading module 14 reads map information containing polygon information of the flow-to area (Step S307: Map information reading step).

The third unification module 68 unifies overlapping target user point data for the same user and the same flow-to area among the target user point data extracted by the target user point data extraction module 66 into single target user point data (Step S308: Third unification step). When the polygon information to which the location information belongs is the same and there are a plurality of target user point data containing the same user identification information, the third unification module 68 may leave one of those target user point data and eliminate the other target user point data to thereby unify the overlapping target user point data for the same user and the same flow-to area into single target user point data.

Further, as another example, the third unification module 68 may sort the input target user point data by user and determine polygon information to which the location information of each of the target user point data belongs from the location information contained in the target user point data and the polygon information contained in the map information, count the total number of flow-to areas (i.e. the number of different polygon information) for each of the users, and set the number of users of one flow-to area for a given user as the inverse of the total number of flow-to areas of the user (i.e. "1/the total number of flow-to areas of the user"). In other words, the third unification module 68 may make setting so that the target user point data for one flow-to area for the given user is counted as the number of people of "1/the total number of flow-to areas of the user"). In this manner, by setting the number of users of one flow-to area as the inverse of the total number of flow-to areas of the user for each of the users and then performing aggregation of the number of users by the location information aggregation module 69, it is possible to avoid redundant counting of the point data of different flow-to areas for the same user.

The location information aggregation module 69 performs aggregation of the number of outflow users who have flowed out of the target area during the target time period for each of the flow-to areas based on the unified target user point data by the third unification module 68 (Step S309: Location information aggregation step).

The approximate outflow population calculation module 70 calculates an approximate outflow population from the target area during the target time period, including people who are irrelevant to the point data in addition to the users, for each of the flow-to areas based on the number of outflow users counted by the location information aggregation module 69 and the ratio of the approximate outflow population and the number of outflow users (Step S310: Approximate outflow population calculation step).

The map information combining module 71 combines the map information read by the map information reading module 14 and the approximate outflow population for each of the flow-to areas calculated by the approximate outflow population calculation module 70 (Step S311: Map information combining step).

The output module 22 outputs the map information combined by the map information combining module 71 (Step S312: Output step).

The effects and advantages of the location information analysis system 800b according to the embodiment are described hereinafter.

In the location information analysis system 800b, the point data reading module 12 reads location information based on a target time period, and the address information reading module 17 reads address information. With use of those information, it is possible to approximate how many people flows from a specific target area to which area during a specific target time period.

Further, the second unification module 23 of the location information analysis device 1 unifies overlapping point data for the same user among the point data read by the point data reading module 12 into single point data, and the ratio calculation module 24 calculates the ratio of the national population and the total number of the unified point data by the second unification module 23. By calculating the ratio of the total population of Japan and the number of users who have registered the point data, it is possible to calculate the approximate outflow population, which is the approximate value including people who have not registered the point data, from the number of outflow users which is calculated based on the users who have registered the point data.

### Reference Signs List

1, 60... location information analysis device, 10... communication system, 11... target time period input module, 12... point data reading module, 13... target area input module, 14... map information reading module, 15... target area point data extraction module, 16... first unification module, 17... address information reading module, 18... first combining module, 19... address information aggregation module, 20... approximate inflow population calculation module, 21... second combining module, 22... output module, 23... second unification module, 24... ratio calculation module, 30... location information database, 40... address information database, 50... map information database, 63... user identifier extraction module, 66... target user point data extraction module, 68... third unification module, 69... location information aggregation module, 70... approximate outflow population calculation module, 71... map information combining module, 100... mobile station, 200... BTS, 300... RNC, 400... exchange, 500... control center, 501... social sensor unit, 502... peta-mining unit, 503... mobile demography unit, 504... visualization solution unit, 700... various processing nodes, 800a, 800b... location information analysis system

## Claims

1. A location information analysis device that obtains an approximate inflow population into a target area during a target time period for each of flow-from areas based on point data containing location information indicating a location of a user, time information when the location information is obtained, and user identification information of the user, comprising:
a point data reading module that reads point data containing time information indicating time within the target time period for all users;
a target area point data extraction module that extracts point data containing location information indicating a location within the target area as target area point data, from the point data read by the point data reading module;
a first unification module that unifies overlapping target area point data for the same user among the target area point data extracted by the target area point data extraction module into single target area point data;
an address information reading module that reads address information about a corresponding user using the user identification information in the unified target area point data unified by the first unification module as a key;
a first combining module that combines the address information read by the address information reading module and the target area point data of the corresponding user;
a map information reading module that reads map information indicating a region including the target area and the flow-from areas; and
an address information aggregation module that performs aggregation of number of inflow users flowing into the target area during the target time period for each of the flow-from areas read by the map information reading module based on the target area point data containing the address information combined by the first combining module.

2. The location information analysis device according to Claim 1, further comprising:
an approximate inflow population calculation module that calculates an approximate inflow population into the target area during the target time period, including people irrelevant to the point data in addition to the users, for each of the flow-from areas based on the number of inflow users counted by the address information aggregation module and a ratio of the approximate inflow population and the number of inflow users.

3. The location information analysis device according to Claim 2, further comprising:
a second unification module that unifies overlapping point data for the same user among the point data read by the point data reading module into single point data; and
a ratio calculation module that calculates a ratio of a national population and total number of the unified point data unified by the second unification module,
wherein the approximate inflow population calculation module uses the ratio calculated by the ratio calculation module as the ratio of the approximate inflow population and the number of inflow users.

4. A location information analysis device that obtains an approximate outflow population from a target area during a target time period for each of flow-to areas based on point data containing location information indicating a location of a user, time information when the location information is obtained, and user identification information of the user, comprising:
an address information reading module that reads address information associated with user identification information;
a user identifier extraction module that extracts user identification information associated with address information belonging to the target area among the address information read by the address information reading module;
a point data reading module that reads point data containing time information indicating time within the target time period for all users;
a target user point data extraction module that extracts point data containing the user identification information extracted by the user identifier extraction module as target user point data, from the point data read by the point data reading module;
a map information reading module that reads map information indicating a region including the flow-to areas;
a third unification module that unifies overlapping target user point data for the same user and the same flow-to area among the target user point data extracted by the target user point data extraction module into single target user point data; and
a location information aggregation module that performs aggregation of number of outflow users flowing out of the target area during the target time period for each of the flow-to areas based on the unified target user point data unified by the third unification module.

5. The location information analysis device according to Claim 4, further comprising:
an approximate outflow population calculation module that calculates an approximate outflow population from the target area during the target time period, including people irrelevant to the point data in addition to the users, for each of the flow-to areas based on the number of outflow users counted by the location information aggregation module and a ratio of the approximate outflow population and the number of outflow users.

6. The location information analysis device according to Claim 5, further comprising:
a second unification module that unifies overlapping point data for the same user among the point data read by the point data reading module into single point data; and
a ratio calculation module that calculates a ratio of a national population and total number of the unified point data unified by the second unification module,
wherein the approximate outflow population calculation module uses the ratio calculated by the ratio calculation module as the ratio of the approximate outflow population and the number of outflow users.

7. The location information analysis device according to any one of Claims 1 to 6, further comprising:
a target area input module for inputting the target area.

8. The location information analysis device according to any one of Claims 1 to 7, further comprising:
a target time period input module for inputting the target time period.

9. A location information analysis device that obtains an approximate inflow population into a target area during a target time period for each of flow-from areas based on point data containing location information indicating a location of a user, time information when the location information is obtained, and user identification information of the user, comprising:
a point data reading module that reads point data containing time information indicating time within the target time period for all users;
a target area point data extraction module that extracts point data containing location information indicating a location within the target area as target area point data, from the point data read by the point data reading module;
a first unification module that unifies overlapping target area point data for the same user among the target area point data extracted by the target area point data extraction module into single target area point data;
an address information reading module that reads address information about a corresponding user using the user identification information in the unified target area point data unified by the first unification module as a key;
a first combining module that combines the address information read by the address information reading module and the target area point data of the corresponding user;
a map information reading module that reads map information indicating a region including the target area and the flow-from areas;
an address information aggregation module that performs aggregation of number of inflow users flowing into the target area during the target time period for each of the flow-from areas read by the map information reading module based on the target area point data containing the address information combined by the first combining module;
an approximate inflow population calculation module that calculates an approximate inflow population into the target area during the target time period, including people irrelevant to the point data in addition to the users, for each of the flow-from areas based on the number of inflow users counted by the address information aggregation module and a ratio of the approximate inflow population and the number of inflow users;
a second combining module that combines the map information read by the map information reading module and the approximate inflow population for each of the flow-from areas calculated by the approximate inflow population calculation module; and
an output module that outputs the map information combined by the second combining module.

10. A location information analysis device that obtains an approximate outflow population from a target area during a target time period for each of flow-to areas based on point data containing location information indicating a location of a user, time information when the location information is obtained, and user identification information of the user, comprising:
an address information reading module that reads address information associated with user identification information;
a user identifier extraction module that extracts user identification information associated with address information belonging to the target area among the address information read by the address information reading module;
a point data reading module that reads point data containing time information indicating time within the target time period for all users;
a target user point data extraction module that extracts point data containing the user identification information extracted by the user identifier extraction module as target user point data, from the point data read by the point data reading module;
a map information reading module that reads map information indicating a region including the flow-to areas;
a third unification module that unifies overlapping target user point data for the same user and the same flow-to area among the target user point data extracted by the target user point data extraction module into single target user point data;
a location information aggregation module that performs aggregation of number of outflow users flowing out of the target area during the target time period for each of the flow-to areas based on the unified target user point data unified by the third unification module;
an approximate outflow population calculation module that calculates an approximate outflow population from the target area during the target time period, including people irrelevant to the point data in addition to the users, for each of the flow-to areas based on the number of outflow users counted by the location information aggregation module and a ratio of the approximate outflow population and the number of outflow users;
a map information combining module that combines the map information read by the map information reading module and the approximate outflow population for each of the flow-to areas calculated by the approximate outflow population calculation module; and
an output module that outputs the map information combined by the map information combining module.

11. A location information analysis method for obtaining an approximate inflow population into a target area during a target time period for each of flow-from areas based on point data containing location information indicating a location of a user, time information when the location information is obtained, and user identification information of the user, comprising:
a point data reading step of reading point data containing time information indicating time within the target time period for all users;
a target area point data extraction step of extracting point data containing location information indicating a location within the target area as target area point data, from the point data read in the point data reading step;
a first unification step of unifying overlapping target area point data for the same user among the target area point data extracted in the target area point data extraction step into single target area point data;
an address information reading step of reading address information about a corresponding user using the user identification information in the unified target area point data unified in the first unification step as a key;
a first combining step of combining the address information read in the address information reading step and the target area point data of the corresponding user;
a map information reading step of reading map information indicating a region including the target area and the flow-from areas; and
an address information aggregation step of performing aggregation of number of inflow users flowing into the target area during the target time period for each of the flow-from areas read in the map information reading step based on the target area point data containing the address information combined in the first combining step.

12. A location information analysis method for obtaining an approximate outflow population from a target area during a target time period for each of flow-to areas based on point data containing location information indicating a location of a user, time information when the location information is obtained, and user identification information of the user, comprising:
an address information reading step of reading address information associated with user identification information;
a user identifier extraction step of extracting user identification information associated with address information belonging to the target area among the address information read in the address information reading step;
a point data reading step of reading point data containing time information indicating time within the target time period for all users;
a target user point data extraction step of extracting point data containing the user identification information extracted in the user identifier extraction step as target user point data, from the point data read in the point data reading step;
a map information reading step of reading map information indicating a region including the flow-to areas;
a third unification step of unifying overlapping target user point data for the same user and the same flow-to area among the target user point data extracted in the target user point data extraction step into single target user point data; and
a location information aggregation step of performing aggregation of number of outflow users flowing out of the target area during the target time period for each of the flow-to areas based on the unified target user point data unified in the third unification step.

13. A location information analysis method for obtaining an approximate inflow population into a target area during a target time period for each of flow-from areas based on point data containing location information indicating a location of a user, time information when the location information is obtained, and user identification information of the user, comprising:
a point data reading step of reading point data containing time information indicating time within the target time period for all users;
a target area point data extraction step of extracting point data containing location information indicating a location within the target area as target area point data, from the point data read in the point data reading step;
a first unification step of unifying overlapping target area point data for the same user among the target area point data extracted in the target area point data extraction step into single target area point data;
an address information reading step of reading address information about a corresponding user using the user identification information in the unified target area point data unified in the first unification step as a key;
a first combining step of combining the address information read in the address information reading step and the target area point data of the corresponding user;
a map information reading step of reading map information indicating a region including the target area and the flow-from areas;
an address information aggregation step of performing aggregation of number of inflow users flowing into the target area during the target time period for each of the flow-from areas read in the map information reading step based on the target area point data containing the address information combined in the first combining step;
an approximate inflow population calculation step of calculating an approximate inflow population into the target area during the target time period, including people irrelevant to the point data in addition to the users, for each of the flow-from areas based on the number of inflow users counted in the address information aggregation step and a ratio of the approximate inflow population and the number of inflow users;
a second combining step of combining the map information read in the map information reading step and the approximate inflow population for each of the flow-from areas calculated in the approximate inflow population calculation step; and
an output step of outputting the map information combined in the second combining step.

14. A location information analysis method for obtaining an approximate outflow population from a target area during a target time period for each of flow-to areas based on point data containing location information indicating a location of a user, time information when the location information is obtained, and user identification information of the user, comprising:
an address information reading step of reading address information associated with user identification information;
a user identifier extraction step of extracting user identification information associated with address information belonging to the target area among the address information read in the address information reading step;
a point data reading step of reading point data containing time information indicating time within the target time period for all users;
a target user point data extraction step of extracting point data containing the user identification information extracted in the user identifier extraction step as target user point data, from the point data read in the point data reading step;
a map information reading step of reading map information indicating a region including the flow-to areas;
a third unification step of unifying overlapping target user point data for the same user and the same flow-to area among the target user point data extracted in the target user point data extraction step into single target user point data;
a location information aggregation step of performing aggregation of number of outflow users flowing out of the target area during the target time period for each of the flow-to areas based on the unified target user point data unified in the third unification step;
an approximate outflow population calculation step of calculating an approximate outflow population from the target area during the target time period, including people irrelevant to the point data in addition to the users, for each of the flow-to areas based on the number of outflow users counted in the location information aggregation step and a ratio of the approximate outflow population and the number of outflow users;
a map information combining step of combining the map information read in the map information reading step and the approximate outflow population for each of the flow-to areas calculated in the approximate outflow population calculation step; and
an output step of outputting the map information combined in the map information combining step.
